# EUROPEAN PATENT APPLICATION

(11) **EP 4 675 993 A1**
(43) Date of publication of application: **07.01.2026**
(21) Application number: 24769659.4
(22) Date of filing: 22.01.2024
(51) Int. Cl.: H04L 45/02

(54) **PATH DETERMINATION METHOD, AND ELECTRONIC DEVICE AND STORAGE MEDIUM**

(30) Priority: 10.03.2023 CN 202310261060
(71) Applicant: ZTE Corporation, Shenzhen, Guangdong 518057 (CN)
(72) Inventor: WU, Haisheng, Shenzhen, Guangdong 518057 (CN); ZHU, Chun, Shenzhen, Guangdong 518057 (CN); ZHANG, Zheng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/073472
(87) International publication number: WO 2024/187963

(57) **Abstract**

Provided are a path determination method, and an electronic device and a storage medium. The path determination method comprises: acquiring a time constraint condition and a network topology of a communication network, wherein the network topology is used for indicating nodes and links in the communication network, and the links have valid time periods; and according to the time constraint condition, determining a target path between a first node and a second node from the network topology, wherein the time constraint condition is used for constraining the valid time period of a target link which forms the target path.

## Description

The present disclosure claims a priority to Chinese Patent Application No. 202310261060.8, filed on March 10, 2023, which is hereby incorporated by reference in its entirety.

### TECHNICAL FIELD

The present disclosure relates to the technical field of communications, and in particular, to a path determination method, an electronic device, and a storage medium.

### BACKGROUND

With the continuous development of information technology, a spatial scope of information services continues to expand, various space-based, air-based, sea-based, and ground-based network services continue to emerge, and requirements for multi-dimensional comprehensive information resources are gradually increasing. The space-air-ground integrated network is able to provide seamless information services for users on land, sea, air, and space, which meets the future network's requirements for all-time, all-domain, and all-space communications and network interconnection.

### SUMMARY

In one aspect, a path determination method is provided in the present disclosure. The path determination method includes:
acquiring a time constraint condition and a network topology of a communication network, where the network topology is used to indicate nodes and links in the communication network, and there is a valid time duration for a link; determining a target path between a first node and a second node from the network topology according to the time constraint condition, where the time constraint condition is used to constrain a valid time duration for a target link for constituting the target path.

In another aspect, a path determination apparatus is provided in the present disclosure. The path determination apparatus includes: an acquisition unit and a processing unit.

The acquisition unit is configured to acquire a time constraint condition and a network topology of a communication network, where the network topology is used to indicate nodes and links in the communication network, and there is a valid time duration for a link.

The processing unit is configured to determine a target path between a first node and a second node from the network topology according to the time constraint condition, where the time constraint condition is used to constrain a valid time duration for a target link for constituting the target path.

In yet another aspect, an electronic device is provided. The electronic device includes: a processor and a memory; where the memory stores instructions executable for the processor; the processor is configured to, upon the instructions being executed, cause the electronic device to implement the path determination method according to the above-mentioned aspect.

In yet another aspect, a computer-readable storage medium is provided. The computer-readable storage medium stores computer instructions that, when run on a computer, enable the computer to perform the path determination method according to the above-mentioned aspect.

In yet another aspect, a computer program product including computer instructions is provided. In response to that the computer instructions are run on a computer, the computer is enabled to perform the path determination method according to the above-mentioned aspect.

### BRIEF DESCRIPTION OF THE DRAWINGS

The accompanying drawings are used to provide a further understanding of technical solutions of the present disclosure, and are constituted as a part of the specification. The accompanying drawings are used to explain the technical solutions of the present disclosure together with the embodiments of the present disclosure, but do not constitute a limitation on the technical solutions of the present disclosure.
FIG. 1 is a schematic diagram of an architecture of a space-air-ground integrated network according to some embodiments.
FIG. 2 is a schematic diagram of a network topology according to some embodiments.
FIG. 3 is a flowchart of a path determination method according to some embodiments.
FIG. 4 is a schematic diagram of a topology snapshot according to some embodiments.
FIG. 5A is a schematic diagram of another network topology according to some embodiments.
FIG. 5B is a schematic diagram of yet another network topology according to some embodiments.
FIG. 5C is a schematic diagram of yet another network topology according to some embodiments.
FIG. 6 is a schematic diagram of a composition of a path determination apparatus according to some embodiments.
FIG. 7 is a structural schematic diagram of a path determination apparatus according to some embodiments.

### DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a part of embodiments of the present disclosure, but not all of the embodiments. All other embodiments obtained based on the embodiments of the present disclosure by an ordinary person of those skilled in the art without paying any creative effort shall belong to the protection scope of the present disclosure.

The terms "first", "second", etc., are merely used for a purpose of description, and are not to be understood as indicating or implying the relative importance or implicitly indicating the number of indicated technical features. Thus, features limited with the wordings of "first", "second", etc., may explicitly or implicitly include one or more of the features. In the description of the present disclosure, the terms of "multiple", "a plurality of" or "the plurality of" means a number of two or more than two.

In the embodiments of the present disclosure, wordings such as "exemplarily" or "for example" and variations thereof are used to indicate examples, instances, or illustrations. Any embodiment or design solution described in the embodiments of the present disclosure with wordings such as "exemplarily" or "for example" should not be illustrated as being more preferred or advantageous over other embodiments or design solutions. Specifically, the usage of the wordings such as "exemplarily" or "for example" is intended to present relevant concepts in a concrete way.

To facilitate understanding, some basic concepts of terms or technologies involved in the embodiments of the present disclosure are first briefly introduced and illustrated.

Shortest path first (SPF) algorithm: the SPF algorithm is used to calculate a shortest path from one node to other nodes. For this algorithm, each router may be taken as a root (ROOT) to calculate a distance from the root to each other destination router, and the root may be taken as a center for expansion outwards layer by layer until an end point is reached. In this way, each router may calculate a topology structure diagram of the routing domain based on a unified database. This structure diagram is similar to a tree, and is referred to as a shortest-path tree in the SPF algorithm. The SPF algorithm is the basis of the open shortest path first (OSPF) routing protocol, and is sometimes also referred to as the Dijkstra algorithm. In the OSPF routing protocol, a trunk length of the shortest-path tree (that is, a distance from the OSPF router to each destination router) is referred to as a cost of OSPF.

Constraint-based shortest path first (CSPF) algorithm: the CSPF algorithm is an extension of the SPF algorithm. Specifically, for the CSPF algorithm, specific constraint conditions need to be considered upon calculating the shortest path. For example, based on resource availability and whether a selected part violates a user policy constraint, nodes and links that do not meet conditions may be deleted from a current topology structure, and then a shortest path to a specified address meeting a constraint condition may be calculated according to the SPF. Currently, main constraint conditions of the CSPF algorithm include: a metric-type, a hop count, a bandwidth, a shared risk link group (SRLG), affinity, etc.

Traffic engineering (TE): the traffic engineering is a processing procedure of selecting a transmission path according to characteristics of various data service traffics, and is used to balance the load between different switches, routers, and links in a network. The traffic engineering may include a series of methods for optimizing network performance, i.e., analyzing, predicting and purposefully managing behaviors and patterns of data flows in the network. In a complex network environment, the traffic engineering controls different services flows along different paths, ensuring that critical services follow reliable paths and ensuring quality of service. In addition, the traffic engineering dynamically adjusts routes in a case where a certain section of the network is congested. An ultimate goal of the traffic engineering is to optimize the usage load of network device and improve the overall performance of the network.

The above description is an introduction to some technical terms involved in the embodiments of the present disclosure, which will not be repeated below.

The space-air-ground integrated network is based on the ground-based network, supplemented and extended by the space-based network and the air-based network, and the space-air-ground integrated network provides a ubiquitous, intelligent, collaborative and efficient infrastructure for information security for various network applications within a wide area. The space-air-ground integrated network may effectively and comprehensively utilize various resources through deep integration of multi-dimensional networks, to perform intelligent network control and information processing, thereby meeting the requirements for vastly different network services. Due to the high-speed movement of satellites, position coordinates, inter-satellite links, and connection states of satellite nodes in the network may change over time, making a network topology complex and changeable.

In view of this, the present disclosure provides a path determination method, and the method includes: first acquiring a network topology of a communication network, where the network topology includes a plurality of nodes and a plurality of links for connecting nodes, and there is a valid time duration for a link; then determining a target path between a first node and a second node from the network topology based on the time constraint condition, where the time constraint condition is used to constrain a valid time duration for a target link for constituting the target path. In this way, the path calculation between two nodes in a terrestrial network or an inter-satellite network with time attributes may be satisfied.

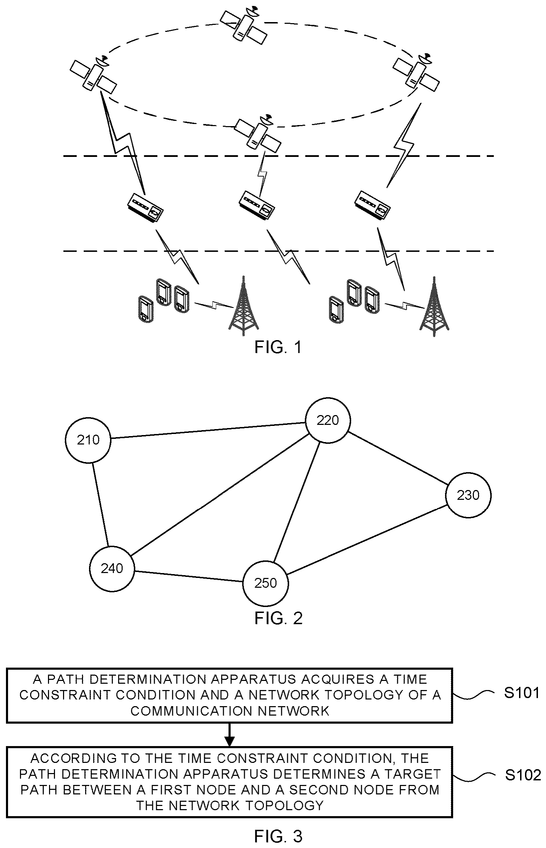

FIG. 1 shows an architecture of a space-air-ground integrated network. As shown in FIG. 1, the network architecture includes a space-based network, an air-based network and a ground-based network.

The space-based network consists of a space-based backbone network and a space-based access network composed of various satellite systems, which may achieve functions such as global coverage, ubiquitous connectivity, and broadband access. In the architecture of the space-air-ground integrated network, space-based network (mainly various satellite networks) technology occupies a core position, and is the key technology for constructing the space-air-ground integrated network. The space-based network may consist of a series of high earth orbit satellites, medium earth orbit (MEO) satellites and low earth orbit (LEO) satellites, thereby implementing inter-satellite communication through inter-satellite data links between satellites.

The ground-based network may include: a cellular wireless network (e.g., a 4th-generation (4G) communication system such as a long-term evolution (LTE) system, a 5th-generation (5G) communication system such as a new radio (NR) system, and other future mobile communication systems); satellite ground stations and mobile satellite terminals; and ground-based data and processing centers. The ground-based network may be responsible for network services in a service-intensive area.

The air-based network may include high-altitude communication platforms, drone self-organizing networks, and various aircraft, and have functions of enhancing coverage, enabling edge services, and flexible network reconstruction.

FIG. 2 is a schematic diagram of a network topology according to the present disclosure. As shown in FIG. 2, the network topology includes a first node 210, a second node 220, a third node 230, a fourth node 240, and a fifth node 250.

In some embodiments, the network topology may further include a network controller (not shown in FIG. 2), such as a host, a server, a switch, a satellite controller, etc. The network controller is respectively connected to the first node 210, the second node 220, the third node 230, the fourth node 240, and the fifth node 250, and may respectively control the first node 210, the second node 220, the third node 230, the fourth node 240, and the fifth node 250.

Exemplarily, the network topology may include satellite nodes. A satellite node may also be referred to as a satellite, a communication satellite, etc. A satellite node may be a geostationary earth orbit (GEO) satellite or a non-geostationary earth orbit (NGEO) satellite, and may also be a high earth orbit satellite, a medium earth orbit satellite or a low earth orbit satellite. There is a wireless link between one satellite node and another satellite node, and there is also a wireless link between a satellite node and a ground node.

The network topology may further include ground nodes. A ground node may refer to a ground device (such as observation stations, gateway stations, ground stations, etc.) installed on the surface of the earth (including on ships or aircraft) for satellite communication. The ground node may be composed of a high-gain antenna system capable of tracking artificial satellites, a microwave high-power transmission system, a low-noise receiving system and a power supply system, etc., and the ground node is configured to transmit signaling and service data between the ground node and the satellite node.

In addition, each node may flood CSPF algorithm information carrying constraint type information corresponding to a link bandwidth constraint condition in the network topology. The network controller or a starting node that needs to send a message may use link information come from other nodes in the network topology in combination with the CSPF algorithm to calculate an optimal path from the starting node to a target node.

Those skilled in the art may understand that the topology structure shown in FIG. 2 does not constitute a limitation on the embodiments of the present disclosure, and it may include more or fewer components than shown in the figure, or may be combined with certain components, or may be in different arrangements for components.

A path determination apparatus is further provided in the embodiments of the present disclosure, and the path determination apparatus is an execution subject of the path determination method provided in the embodiments of the present disclosure. The path determination apparatus is a control device with data processing capabilities, and may be applied to the above-mentioned satellite nodes or ground nodes. For example, the path determination apparatus may be any node in the above-mentioned topology network, or may also be a network controller, a satellite controller, etc. Alternatively, the path determination apparatus is a functional module in the control device, or the path determination apparatus may be any computing device connected to the control device, etc., which is not limited in the embodiments of the present disclosure.

The path determination method provided in the present disclosure may be illustrated below in detail in combination with the accompanying drawings of the specification.

As shown in FIG. 3, a path determination method is provided in the embodiments of the present disclosure, and the method includes the following S101-S102.

In S101, a path determination apparatus acquires a time constraint condition and a network topology of a communication network.

The network topology is used to indicate nodes and links in the communication network.

In some embodiments, the nodes in the network topology include a satellite node or a ground node. Therefore, the links in the network topology include a link between a satellite node and another satellite node, a link between a satellite node and a ground node, or a link between a ground node and another ground node.

It should be noted that due to the high-speed movement of satellites, position coordinates, inter-satellite links and connection state of satellite nodes in the network may change over time. That is, links related to satellite nodes, which include links between satellite nodes and links between satellite nodes and ground nodes, may change over time.

In some embodiments, the above-mentioned network topology may be determined based on ephemeris information of a satellite node in the communication network. In one implementation, the network topology may be determined by adopting a satellite network static routing algorithm, such as a snapshot routing algorithm. Based on the snapshot routing algorithm and the ephemeris information of the satellite node, a dynamic topology of the communication network within a time period may be divided into a plurality of topology snapshots. A topology snapshot corresponds to a portion of the time period, and a network topology within each topology snapshot may be considered still. In some embodiments, among the plurality of topology snapshots within the time period, one or more snapshots may appear repeatedly in a certain pattern. For example, a plurality of topology snapshots within a time period include snapshot a, snapshot b, snapshot c, snapshot d, snapshot e, and snapshot f. The snapshot a is the same as the snapshot d, the snapshot b is the same as the snapshot e, and the snapshot c is the same as the snapshot f. Thus, a dynamic topology within this time period may be considered as cycles of the snapshot a and the snapshot b.

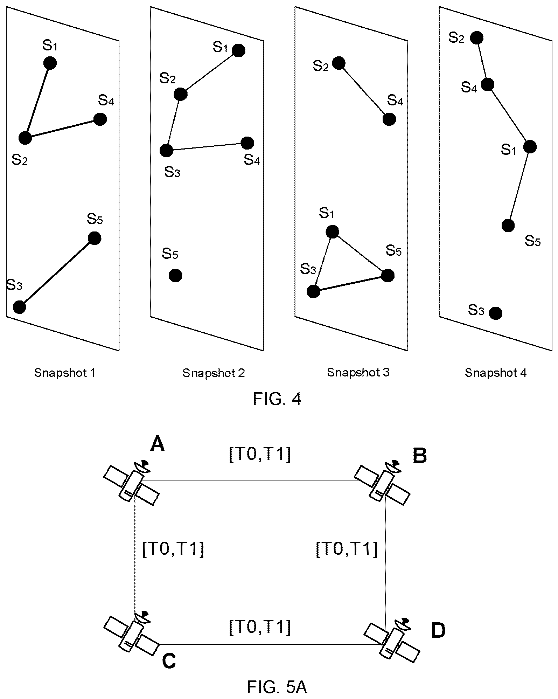

In one example, a highly dynamic network topology may be divided into a plurality of topology snapshots with the same duration. For example, a satellite movement cycle is divided into a plurality of slots, and within a slot, the network topology of the communication network remains unchanged. A slot corresponds to a time interval, and the slot includes a starting moment and an ending moment of the time interval, for example, the plurality of slots include a slot [T0, T1], a slot [T1, T2], a slot [T2, T3], and a slot [T3, T4]. Therefore, the dynamically changed network topology within a movement cycle may be mapped into a plurality of time-discrete network snapshots based on respective slots. As shown in FIG. 4, for nodes *S*₁-*S*₅, a network topology corresponding to the slot [T0, T1] is snapshot 1 in FIG. 4; a network topology corresponding to the slot [T1, T2] is snapshot 2 in FIG. 4; a network topology corresponding to the slot [T2, T3] is snapshot 3 in FIG. 4; and a network topology corresponding to the slot [T3, T4] is snapshot 4 in FIG. 4.

In another example, establishment and removal for satellite-to-ground and inter-satellite links may be used as a basis for dividing snapshots, that is, durations of the plurality of topology snapshots may be different. For example, based on establishment moments and removal moments of satellite-to-ground and inter-satellite links, a satellite movement cycle is divided into a plurality of time intervals, and durations corresponding to the plurality of time intervals may be different. Within a time interval, a network topology of the communication network remains unchanged.

It should be understood that the above-mentioned examples are merely examples for dividing topology snapshots, and topology snapshots may also be divided in other ways, which are not limited in the present disclosure.

Furthermore, there is a valid time duration for a link in the above-mentioned network topology. During the movement and change of respective nodes in the communication network, a valid time duration for a link may be a time duration from establishment to removal of the link, or the valid time duration may be within a time duration from establishment to removal of the link. Therefore, during a valid time duration for a link, the link remains a current connection state unchanged.

In some embodiments, a valid time duration for a link may be determined based on a time interval corresponding to a topology snapshot. For example, a valid time duration for a link *S*₁-*S*₅ in snapshot 3 of FIG. 4 may be [T2, T3].

In some embodiments, there may be a plurality of valid time durations for a link.

In some embodiments, the path determination apparatus may acquire ephemeris information of a satellite node, and determine a valid time duration for a link related to the satellite node based on the ephemeris information of the satellite node.

Ephemeris information of a satellite node is also referred to as two-line orbital element (TLE), which includes beam parameters, physical resources, and scheduling information of a satellite. In some embodiments, the ephemeris information of the satellite node may further include one or more of: a satellite identification (ID), a satellite working state, or a satellite orbit parameter.

Beam parameters of a satellite may include a number of beams, a beam angle, a beam tilt angle, a beam ID, and a tracking area list. Physical resources of a satellite may include a working bandwidth, a working frequency, and a carrier spacing. Scheduling information of a satellite may include a number of terminals currently accessing, time domain resources, frequency domain resources, code domain resources, and a beam resource occupancy. A satellite working state includes an active state, an idle state, etc. A satellite orbit parameter includes an orbit altitude, an orbit inclination, etc.

Therefore, ephemeris information of a satellite node may be used to determine an operating state of the satellite node, such as an operating time, position or speed of the satellite. Therefore, the path determination apparatus may determine an operating state of the satellite node in the communication network based on the ephemeris information of the satellite node, thereby determining a time duration from establishment to removal of the link related to the satellite node as the valid time duration for the link.

In addition, the above-mentioned time constraint condition is used to constrain a valid time duration for a link for constituting the path to be determined.

In one embodiment, the path determination apparatus may receive the network topology and the time constraint condition sent from other nodes in the communication network.

In one example, the path determination apparatus may acquire the network topology and the time constraint condition from a ground node. A ground node may generate a network topology based on acquired information in the communication network, for example, the ground node may generate the network topology based on the above-mentioned snapshot routing algorithm. In addition, the time constraint condition may be determined by the ground node based on service requirements of the communication network. The ground node may also send the time constraint condition to the path determination apparatus. Therefore, the ground node may send the determined network topology and time constraint condition to the path determination apparatus.

In another example, the path determination apparatus may acquire the network topology and the time constraint condition from a satellite node. A satellite node may self-learn a routing algorithm, such as the above-mentioned snapshot routing algorithm, and autonomously generate the network topology based on acquired information from the communication network. In addition, the satellite node may further receive the service requirements of the communication network from the ground node, and then generate the time constraint condition. Thus, the satellite node may send the determined network topology and the time constraint condition to the path determination apparatus.

In S102, the path determination apparatus determines a target path between a first node and a second node from the network topology according to the time constraint condition.

The first node and the second node may be any two nodes in the above-mentioned communication network, and the above-mentioned time constraint condition is used to constrain a valid time duration for a target link for constituting the target path between the first node and the second node.

In some embodiments, a time constraint condition includes at least one of: a valid time duration for a link matching at least one first preset time duration; the valid time duration for the link not matching at least one second preset time duration.

If a valid time duration for a link is within the first preset time duration, or the valid time duration for the link completely overlaps with the first preset time duration, it may be determined that the valid time duration for the link matches the first preset time duration. On the contrary, if a valid time duration for a link is not within the first preset time duration, and does not completely overlap with the first preset time duration, it may be determined that the valid time duration for the link does not match the first preset time duration.

In some embodiments, the time constraint condition may have the following forms. Form 1: a valid time duration for a link matches a first preset time duration. Form 2: a valid time duration for a link matches a plurality of first preset time durations. Form 3: a valid time duration for a link does not match a second preset time duration. Form 4: a valid time duration for a link does not match a plurality of second preset time duration.

In some embodiments, the time constraint condition may be determined based on service requirements of a user. For example, if a service requirement of the user is to establish an optimal satellite route for exclusive usage in a fixed time duration, the time constraint condition may be the above-mentioned form 1. Alternatively, if a service requirement of the user is to establish an optimal satellite route that is used during a period excluding popular time durations, the time constraint condition may be form 3 or form 4 above. Alternatively, if a service requirement of the user is to establish an optimal satellite route that is capable of being used "anytime, anywhere", that is, satellite routes in a plurality of time durations need to be considered, the time constraint condition may be the above-mentioned form 2.

In some embodiments, the path determination apparatus may determine a shortest path between the first node and the second node from the network topology as the above-mentioned target path based on the CSPF algorithm according to the time constraint condition.

In one embodiment, the path determination apparatus may first acquire first links meeting the time constraint condition in the network topology, and acquire a target network topology formed by the first links. Then, based on the constraint-based shortest path first (CSPF) algorithm, the shortest path between the first node and the second node in the target network topology is determined as the target path.

First, the path determination apparatus may first cut links not meeting the time constraint condition in the network topology based on the time constraint condition to acquire the first links meeting the time constraint condition in the network topology, and then obtain the target network topology composed of the first links.

In one embodiment, based on the above form 1, the time constraint condition is that the valid time duration for the link matches the preset time duration [T0, T1].

Exemplarily, as shown in FIG. 5A, the acquired target network topology includes a satellite node A, a satellite node B, a satellite node C and a satellite node D, where a valid time duration for a link A->B between the satellite node A and the satellite node B is [T0, T1], and a valid time duration for a link A->C, link B->D and link B->D are all [T0, T1]. It can be seen that the link A->B, the link A->C, the link B->D, and the link B->D all match the preset time duration [T0, T1]. Therefore, the path determination apparatus reserves all links in the network topology based on the time constraint condition.

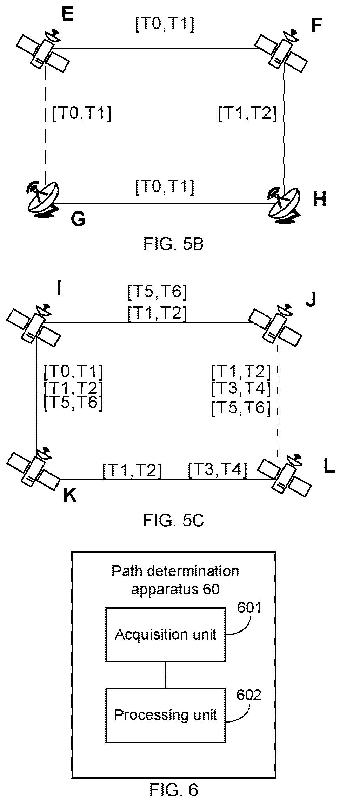

Alternatively, as shown in FIG. 5B, an acquired target network topology includes a satellite node E, a satellite node F, a ground node G and a ground node H, where valid time durations for a link E->F, a link E->G and a link G->H are all [T0, T1], and a valid time duration for a link F->H is [T1, T2]. It can be seen that the link E->F, the link E->G, and the link G->H match the preset time duration [T0, T1]. Therefore, the path determination apparatus reserves the link E->F, the link E->G, and the link G->H based on the time constraint condition.

In another example, based on the above form 3, the time constraint condition is that the valid time duration for the link does not match the preset time duration [T0, T1].

As shown in FIG. 5B, the acquired target network topology includes the satellite node E, the satellite node F, the ground node G, and the ground node H. It can be seen that the link E->F, the link E->G, and the link G->H match the time duration [T0, T1], while the link F->H does not match the preset time duration [T0, T1]. Therefore, the path determination apparatus may cut off the link F->H based on the time constraint condition.

In another example, based on the above form 2, the time constraint condition is that the valid time duration for the link matches the preset time duration [T0, T1] and the preset time duration [T5, T6].

Exemplarily, as shown in FIG. 5C, the acquired target network topology includes a satellite node I, a satellite node J, a satellite node K and a satellite node L, where a valid time duration for a link I->J is [T1, T2] and [T5, T6], a valid time duration for a link I->K is [T0, T1], [T1, T2] and [T5, T6], a valid time duration for a link K->L is [T1, T2] and [T3, T4], and a valid time duration for a link J->L is [T1, T2], [T3, T4] and [T5, T6]. It can be seen that the link K->L does not match the preset time duration [T5, T6]. Therefore, the path determination apparatus cuts off the link K->L based on the time constraint condition.

Furthermore, the path determination apparatus may determine the target path between the first node and the second node from a target network topology obtained after a cutting operation is performed based on the CSPF algorithm.

In some embodiments, based on the CSPF algorithm, a procedure of determining the target path between the first node and the second node from the target network topology may be implemented as the following S11-S16.

In S11, all nodes in the network topology are taken to constitute a first node set, and a second node set and a candidate path set are configured initially as an empty set.

In S12, a first node in the first node set is migrated to the second node set, and the first node is taken as the target node.

In S13, a second path between a third node and the first node is determined according to a first path between the target node and the first node among the candidate path set (if the first node is the target path, then the first path is considered as being absent) and a link between the third node directly connected to the target node and the target node; in a case where the second path meets a path cost constraint condition, the second path is saved to the candidate path set.

In some embodiments, whether the candidate path set includes a third path between the third node and the first node may be detected. In a case where the candidate path set does not include the third path, the second path is saved to the candidate path set. Alternatively, in a case where the candidate path set includes the third path, a path cost of the second path is compared with a path cost of the third path.

In a case where the path cost of the second path is lower than the path cost of the third path, the second path is saved to the candidate path set. On the contrary, in a case where the path cost of the second path is higher than or equal to the path cost of the third path, the second path is not saved, and the third path in the candidate path set remains unchanged.

In S14, path costs of paths between respective nodes in the first node set and the first node are determined according to the candidate path set; a fourth node with a lowest path cost is selected from the first node set, and the fourth node is migrated to the second node set, and the fourth node with the lowest path cost is taken as a new target node.

In S15, path steps S13-S14 are repeated until the first node set is an empty set.

In S16, a target path between the first node and the second node is determined from a plurality of candidate paths in the candidate path set.

For example, taking the network topology shown in FIG. 5B as an example, if the network topology obtained after cutting operation is performed includes a link E->F, a link E->G, and a link G->H, and a link cost cost(E->F) of the link E->F = 10, a link cost cost(E->G) of the link E->G = 12, and a link cost cost(G->H) of the link G->H = 20. Based on the CSPF algorithm and in combination with the above steps S11 to S16, a procedure of determining the target path between the first node E and the second node H from the network topology obtained after cutting operation is performed may be implemented as the following a1 to a10.

In a1, a first node set (E, F, G, H) is constituted by all nodes E, F, G, and H in the network topology, and a second node set and a candidate path set that are initially empty are configured. At this time, both the second node set and the candidate path set are empty sets.

In a2, a first node E in the first node set is migrated to the second node set, and the first node E is taken as the target node.

At this time, the second node set is (E), the first node set is (F, G, H), and the candidate path set is an empty set.

In a3, in combination with S13, a directly connected node of the target node E are nodes F and G, so current second paths include paths E->F and E->G. Furthermore, since the candidate path set is an empty set at this time, the path E->F and the path E->G may be added to the candidate path set.

At this time, the second node set is (E), the first node set is (F, G, H), and the candidate path set is (path E->F, path E->G).

It should be noted that if the candidate path set includes another possible path between the node F and the first node at this time, the path determination apparatus may compare a path cost of that path with a path cost of path E->F. If the path cost of path E->F is lower, a path between node F and the first node in a shortest node set is updated to the path E->F; conversely, if the path cost of path E->F is higher, the candidate path set may not be updated.

In a4, in a case where the first node set is not an empty set, S14 is performed.

At this time, the second node set is (E, F), the first node set is (G, H), and the candidate path set is (path E->F, path E->G).

In the candidate link set, path costs of paths from respective nodes in the first node set to the first node E include: a path cost of path E->F is 10, a path cost of path E->G is 12, and a path between node H and node E is unknown, so the path cost is temporarily considered to be ∞. Therefore, it can be determined that a path with the lowest path cost is path E->F, and the node F is used as the new target node.

In a5, node F is taken as the new target node, and S13 is performed.

Since the link F->H has been cut off, the only directly connected node of node F is node E, and the path E->F has been calculated, so the latest path set is no longer updated.

At this time, the second node set is (E, F), the first node set is (G, H), and the candidate path set is (path E->F, path E->G). The first node set is not an empty set.

In a6, in a case where the first node set is not an empty set, S14 is performed.

According to the candidate path set, determining the path costs of paths from respective nodes in the first node set to the first node E includes: a path cost of the path E->G is 12, a path between the node H and the node E is unknown, and the path cost is temporarily considered to be ∞. Therefore, it can be determined that a path with the lowest path cost is path E->G, and node G is taken as the new target node.

In a7, node G is taken as the new target node, and S13 is performed.

Directly connected nodes of the node G are nodes E and H. Based on current first path E->G and path G->H, it can be determined that the current second path includes the path E->G->H, and a path cost cost(E->G->H) = cost(E->G) + cost(G->H) = 32.

Since a path between the node H and the node E is not recorded in the current candidate path set, a path cost of this path is temporarily considered to be ∞. Therefore, the path cost of the second path E->G->H is lower, and the path E->G->H is updated to the candidate path set.

At this time, the second node set is (E, F, G), the first node set is (H), and the candidate path set is (path E->F, path E->G, path E->G->H). The first node set is not an empty set.

In a8, the node H in the first node set is taken as the new target node.

In a9, the node H is taken as the new target node, and S13 is performed.

Since the link F->H has been cut off, the only directly connected node of the node H is node G, and the link G->H has been calculated, so the latest path set is no longer updated.

At this time, the second node set is (E, F, G, H), the candidate path set is (path E->F, path E->G, path E->G->H), and the first node set is an empty set.

In a10, a target path between the first node E and the second node H is determined from a plurality of candidate paths in the candidate path set.

It should be understood that the path determination apparatus may find that the target path between the first node E and the second node H is path E->G->H. A path cost of the path E->G->H is cost(E->G->H) = cost(E->G) + cost(G->H) = 32.

In one embodiment, the path determination apparatus may, in the network topology, acquire a plurality of candidate paths between the first node and other nodes in the network topology by traversing node by node outward with taking the first node as a starting node, where a candidate path is composed of a plurality of candidate links meeting the time constraint condition, and a candidate link is determined upon traversing a node corresponding to the candidate link; and determine the target path between the first node and the second node from the plurality of candidate paths.

In some embodiments, based on the CSPF algorithm, a procedure of determining the target path between the first node and the second node from a network topology that has not been cut may be implemented as the following S21-S26.

In S21, all nodes in the network topology are taken to constitute a first node set, and a second node set and a candidate path set are configured initially as an empty set.

In S22, a first node in the first node set is migrated to the second node set, and a first node is taken as a target node.

In S23, a second path between a third node and the first node is determined according to a first path between the target node and the first node among the candidate path set (if the first node is the target path, then the first path is considered as being absent) and a link between the third node directly connected to the target node and the target node; in a case where the second path meets the time constraint condition and a path cost constraint condition, the second path is saved to the candidate path set. Therefore, S23 may also be referred to as path screening steps.

In some embodiments, whether the second path meets the time constraint condition may be detected first, and then whether the path cost constraint condition is met may be detected.

Exemplarily, in a case where the second path meets the time constraint condition, whether the candidate path set includes a third path between the third node and the first node may be detected first. Furthermore, in a case where the candidate path set does not include the third path, the second path is saved to the candidate path set.

Alternatively, in a case where the candidate path set includes the third path, a path cost of the second path is compared with a path cost of the third path. Furthermore, in a case where the path cost of the second path is lower than the path cost of the third path, the second path is saved to the candidate path set. On the contrary, in a case where the path cost of the second path is higher than or equal to the path cost of the third path, the second path is not saved, and the third path in the candidate path set remains unchanged.

In addition, in a case where the second path does not meet a time preset condition, the first path is excluded.

In S24, path costs of paths between respective nodes in the first node set and the first node are determined according to the candidate path set; a fourth node with a lowest path cost is selected from the first node set, and the fourth node is migrated to the second node set, and the fourth node with the lowest path cost is taken as a new target node. Therefore, S23 may also be referred to as target node reselection steps.

In S25, path steps S23-S24 are repeated until the first node set is an empty set.

In S26, a target path between the first node and the second node is determined from a plurality of candidate paths in the candidate path set.

For example, taking the network topology shown in FIG. 5B as an example, a network topology that has not been cut includes a link E->F, a link E->G, a link F->H, and a link G->H; a link cost cost(E->F) of the link E->F = 10, a link cost cost(E->G) of the link E->G = 12, a link cost cost(F->H) of the link F->H = 10, and a link cost cost(F->H) of the link F->H = 20. Furthermore, valid time durations for the link E->F, the link E->G, and the link G->H are all [T0, T1], and a valid time duration for the link F->H is [T1, T2].

If a time constraint condition at this time is that a valid time duration for a link matches a time duration [T0, T1], then in combination with the above S21-S26, a procedure of the path determination apparatus determining the target path between the first node E and the second node H based on the CSPF algorithm may be implemented as the following b1-b10.

In b1, a first node set (E, F, G, H) is constituted by all nodes E, F, G, and H in the network topology, and a second node set and a candidate path set that are initially empty are configured. At this time, both the second node set and the candidate path set are empty sets.

In b2, a first node E in the first node set is migrated to the second node set, and the first node E is taken as the target node.

At this time, the second node set is (E), the first node set is (F, G, H), and the candidate path set is an empty set.

In b3, in combination with S23, the directly connected nodes of the target node E are nodes F and G, and E is the first node, so second paths include the paths E->F and E->G.

Since a valid time for the path E->F is [T0, T1] and a valid time for the path E->G is [T0, T1], both of them meet the time constraint condition: a valid time duration for a link matching the time duration [T0, T1]. At this time, whether the candidate path set includes a third path between the third node and the first node may be detected.

Since the candidate path set is an empty set, the path E->F and the path E->G may be added to the candidate path set.

It should be noted that if the candidate path set includes another possible path between the node F and the first node at this time, the path determination apparatus may compare a path cost of that path with a path cost of path E->F. If the path cost of path E->F is lower, a path between node F and the first node in a shortest node set is updated to the path E->F; conversely, if the path cost of path E->F is higher, the candidate path set may not be updated.

In b4, in a case where the first node set is not an empty set, S24 is performed.

At this time, the second node set is (E), the first node set is (F, G, H), and the candidate path set is (path E->F, path E->G).

Path costs of paths from respective nodes in the first node set to the first node E include: a path cost of path E->F is 10, a path cost of path E->G is 12, and a path between node H and node E is unknown, so the path cost is temporarily considered to be ∞. Therefore, it can be determined that a path with the lowest path cost is path E->F, and the node F is used as the new target node.

In b5, node F is taken as the new target node, and S23 is performed.

Nodes directly connected to the node F include the node E and the node H, the first path has been currently calculated includes the path E->F, and the second path includes a path E->F->H. Since a valid time for a link F->G in the path E->F->G is [T1, T2], which does not meet the time constraint condition, the path E->F->G may be excluded at this time, so there is no need to update the latest path set.

At this time, the second node set is (E, F), the first node set is (G, H), and the candidate path set is (path E->F, path E->G). It can be seen that the first node set is not an empty set.

In b6, in a case where the first node set is not an empty set, S24 is performed.

According to the candidate path set, determining the path costs of paths from respective nodes in the first node set to the first node E includes: a path cost of the path E->G is 12, a path between the node H and the node E is unknown, and the path cost is temporarily considered to be ∞. Therefore, it can be determined that a path with the lowest path cost is path E->G, and node G is taken as the new target node.

In b7, the node G is taken as the new target node, and S23 is performed.

Directly connected nodes of the node G are nodes E and H. The first path is path E->G, and the second path includes path E->G->H. The path cost cost(E->G->H) = cost(E->G) + cost(G->H) = 32. Moreover, valid time durations for the links E->G and G->H in the path E->G->H are both [T0, T1], which both meet the time constraint condition.

Since a path between the node H and the node E is not recorded in the current candidate path set, a path cost of this path is temporarily considered to be ∞. Therefore, the path cost of the first path E->G->H is relatively low, and the path E->G->H is updated to the candidate path set.

At this time, the second node set is (E, F, G), the first node set is (H), and the candidate path set is (path E->F, path E->G, path E->G->H). The first node set is not an empty set.

In b8, the node H in the first node set is taken as the new target node.

In b9, the node H is taken as the new target node, and S23 is performed.

The directly connected nodes of node H include node G and node F. Since the link G->H and the link F->H have been calculated, the latest path set is no longer updated.

At this time, the second node set is (E, F, G, H), the candidate path set is (path E->F, path E->G, path E->G->H), and the first node set is an empty set.

In b10, a target path between the first node E and the second node H is determined from a plurality of candidate paths in the candidate path set.

It should be understood that the path determination apparatus may find that the target path between the first node E and the second node H is path E->G->H. A path cost of the path E->G->H is cost(E->G->H) = cost(E->G) + cost(G->H) = 32.

Based on the above-mentioned embodiments, a time constraint condition may be configured in a routing algorithm to meet the path calculation between two nodes in a terrestrial network or an inter-satellite network with time attributes. Furthermore, various types of time constraint conditions may be provided based on computing requirements related to the time attributes in services to accurately meet the service requirements of a user.

The foregoing mainly introduces the solutions provided by the present disclosure from the perspective of interaction between various nodes. It can be understood that, in order to implement the above-mentioned functions, the various nodes, such as an apparatus or device, include corresponding hardware structures and/or software modules for performing the various functions. Those skilled in the art should easily realize that the present disclosure may be implemented in the form of hardware or a combination of hardware and computer software in combination with algorithms and steps described in the embodiments disclosed in the present disclosure. Whether a certain function is implemented by hardware or by computer software driving hardware depends on the specific application and design constraint conditions of the technical solutions. Professional technicians may use different methods to implement the described functions for each specific application, but such implementation should not be considered beyond the scope of the present disclosure.

FIG. 6 is a schematic diagram of a composition of a path determination apparatus provided in the embodiments of the present disclosure. As shown in FIG. 6, the path determination apparatus 60 includes an acquisition unit 601 and a processing unit 602.

In some embodiments, the acquisition unit 601 is configured to acquire a time constraint condition and a network topology of a communication network, where the network topology is used to indicate nodes and links in the communication network, and there is a valid time duration for a link. The processing unit 602 is configured to determine a target path between a first node and a second node from the network topology according to the time constraint condition, where the time constraint condition is used to constrain a valid time duration for a target link for constituting the target path.

In some embodiments, the time constraint condition includes at least one of: the valid time duration for the target link matching at least one first preset time duration; the valid time duration for the target link not matching at least one second preset time duration.

In some embodiments, the processing unit 602 is configured to: acquire first links meeting the time constraint condition from the network topology, and obtain a target network topology formed by the first links; determine a shortest path between the first node and the second node from the target network topology as the target path based on a constraint-based shortest path first (CSPF) algorithm.

In some embodiments, the processing unit 602 is further configured to: in the network topology, acquire a plurality of candidate paths between the first node and other nodes in the network topology by traversing node by node outward with taking the first node as a starting node, where a candidate path is composed of a plurality of candidate links meeting the time constraint condition, and a candidate link is determined upon traversing a node corresponding to the candidate link.

In some embodiments, the processing unit 602 is further configured to: take all nodes in the network topology to constitute a first node set, and configuring a second node set and a candidate path set as empty sets initially; migrate the first node in the first node set to the second node set with taking the first node as a target node; perform path screening steps: determine a second path between a third node and the first node according to a first path (if the first node is the target path, then the first path is considered as being absent) between the target node and the first node among the candidate path set and a link between the third node directly connected with the target node and the target node; and save the second path to the candidate path set in response to that the second path meets the time constraint condition and a path cost constraint condition; perform target node reselection steps: determine path costs of paths between respective nodes in the first node set and the first node according to the candidate path set; select a fourth node with a lowest path cost from the first node set and migrating the fourth node to the second node set, and take the fourth node with the lowest path cost as a new target node; repeat the path screening steps and the target node reselection steps until the first node set is an empty set; acquire the plurality of candidate paths from a finally obtained candidate path set.

In some embodiments, the processing unit 602 is further configured to: detect whether the second path meets the time constraint condition; in response to that the second path meets the time constraint condition, detect whether the candidate path set includes a third path between the third node and the first node; in response to that the candidate path set does not include the third path, save the second path to the candidate path set; in response to that the candidate path set includes the third path, compare a path cost of the second path with a path cost of the third path; in response to that the path cost of the second path is lower than the path cost of the third path, save the second path to the candidate path set.

In some embodiments, the network topology and the time constraint condition are generated by a satellite node or a ground node.

In some embodiments, the acquisition unit 601 is further configured to acquire ephemeris information of a satellite node. The processing unit 602 is further configured to determine a valid time duration for a link related to the satellite node according to the ephemeris information of the satellite node.

In some embodiments, the path determination apparatus 60 is applied to a satellite node, and the acquisition unit 601 is configured to acquire the network topology and the time constraint condition from a ground node.

In some embodiments, the path determination apparatus 60 is applied to a ground node, and the acquisition unit 601 is configured to acquire the network topology and time constraint condition from a satellite node.

It should be noted that units in FIG. 6 may also be referred to as modules. For example, the acquisition unit may be referred to as an acquisition module. In addition, in the embodiments shown in FIG. 6, names of the various units may not be names shown in the figure. For example, the acquisition unit may also be referred to as a communication unit.

If the various units in FIG. 6 are implemented in the form of the software functional module, and sold or used as independent products, they may be stored in a computer-readable storage medium. Based on this understanding, the technical solutions of the present disclosure may be essentially, or a part of the technical solutions of the present disclosure that contributes to the related technologies, or all or a portion of the technical solutions of the present disclosure may be, embodied in the form of a software product, and the computer software product may be stored in a storage medium including couples of instructions to enable a computer device (may be a personal computer, a server, a network device, etc.) or a processor to perform all or a portion of steps of the method in the various embodiments of the present disclosure. The storage medium for storing a computer software product includes various types of medium capable of storing program codes, such as a USB flash drive, a mobile disk, a read-only memory (ROM), a random-access memory (RAM), a magnetic disk, or an optical disk.

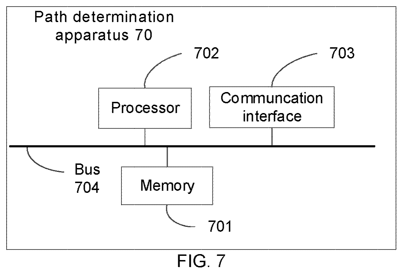

In a case where the functions of the above-mentioned integrated modules are implemented by adopting the form of hardware, there is provided a structural schematic diagram of a path determination apparatus in the embodiments of the present disclosure, the path determination apparatus may be the above-mentioned path determination apparatus 60. As shown in FIG. 7, the path determination apparatus includes: a memory 701, a processor 702, a communication interface 703, and a bus 704.

The memory 701 may be a read-only memory (ROM) or other types of static storage devices that can store static information and instructions, a random access memory (RAM), or other types of dynamic storage devices that can store information and instructions, or an electrically erasable programmable read-only memory (EEPROM), a magnetic disk storage medium or any other magnetic storage devices, or any other medium that can be used to carry or store desired program codes with a form of instructions or data and can be accessed by a computer, which is not limited thereto.

The processor 702 may implement or perform various exemplary logical blocks, modules and circuits described in combination with the present disclosure. The processor 702 may be a central processor, a general-purpose processor, a digital signal processor, an application specific integrated circuit, a field programmable gate array, or other programmable logic component, a transistor logic component, a hardware assembly, or any combination thereof. The processor 702 may implement or execute various illustrative logical blocks, modules and circuits described in conjunction with the disclosed contents of the present disclosure. The processor 702 may also be a combination that implements computing functions, for example, the processor 702 includes a combination of one or more microprocessors, a combination of a DSP (digital signal processor) and a microprocessor, or the like.

The communication interface 703 is configured to connect with other devices through a communication network. The communication network may be the Ethernet, a radio access network, a wireless local area network (WLAN), or the like.

In some embodiment, the memory 701 may exist independently from the processor 702. The memory 701 may be connected to the processor 702 through the bus 704 for storing instructions or program codes. When the processor 702 invokes and executes instructions or program codes stored in the memory 701, the processor 702 may implement the information processing mode determination method provided in the embodiments of the present disclosure.

In some embodiments, the memory 701 may be integrated with the processor 702.

The bus 704 may be an extended industry standard architecture (EISA) bus, or the like. The bus 704 may be classified as an address bus, a data bus, a control bus, or the like. For ease of representation, only one thick solid line is used in FIG. 7 for representing the bus 704, but it does not indicate that there is only one bus or one type of bus.

Through the description of the above implementations, those of ordinary skill in the art can clearly understand that for the convenience and simplicity of the description, the division of the above functional modules is given merely as an example. In practical applications, the above functions can be allocated to different functional modules according to requirements, that is, the internal structure of the device or apparatus may be divided into different functional modules to complete all or part of the functions described above.

A computer-readable storage medium is further provided in the embodiments of the present disclosure. All or part of the processes in the above method embodiments may be implemented by relevant information of an information hardware indicated by computer instructions. The programs may be stored in the above-mentioned computer-readable storage medium, and when executed, the programs may include the processes as described in the above method embodiments. The computer-readable storage medium may be an internal storage unit of a device or an apparatus in any one of the aforementioned embodiments, such as a hard disk or a memory of a computer device. The above-mentioned computer-readable storage medium may also be an external storage device of the above-mentioned device or apparatus, such as a plug-in hard disk, a smart media card (SMC), a secure digital (SD) card, a flash card, etc., equipped on the above-mentioned device or apparatus. Furthermore, the above-mentioned computer-readable storage medium may include both an internal storage unit and an external storage device of the above-mentioned device or apparatus. The above-mentioned computer-readable storage medium is configured to store the above-mentioned computer programs and other programs and data required by the above-mentioned device or apparatus. The above-mentioned computer-readable storage medium may further be configured to temporarily store data that has been output or is to be output. The above-mentioned computer-readable storage medium may include a non-transitory computer-readable storage medium.

A computer program product is further provided in the embodiments of the present disclosure. The computer program product includes computer programs that, when are run on a computer, enable the computer to execute any one of the information processing mode determination methods provided in the above-mentioned embodiments.

Although the present disclosure is described herein in conjunction with various embodiments, other variations of the disclosed embodiments may be understood and implemented by those skilled in the art by viewing the accompanying drawings, the disclosed contents, and the attached claims during the implementation of the present disclosure claimed to be protected. In the claims, "comprise/comprises/comprising" does not exclude other components or steps, and "a/an" or "one" does not exclude a number of a plurality. A single processor or other units may implement couples of functions listed in the claims. Some measures are recorded in different dependent claims, but this does not mean that these measures cannot be combined to produce good results.

Although the present disclosure is described in conjunction with specific features and embodiments thereof, obviously, various modifications and combinations can be made thereto without departing from the spirit and scope of the present disclosure. Accordingly, the specification and accompanying drawings herein are merely exemplary illustration of the present disclosure defined by the claims and are deemed to cover any and all modifications, variations, combinations or equivalents within the scope of the present disclosure. Obviously, those skilled in the art can make various changes and modifications to the present disclosure without departing from the scope of the present disclosure. In this way, if these modifications and variations of the present disclosure fall within the scope of the claims of the present disclosure and their equivalent technologies, the present disclosure is also intended to include these modifications and variations.

The foregoing descriptions are merely specific implementations of the present disclosure, but the protection scope of the present disclosure is not limited thereto. Any variations or replacements within the technical scope disclosed in the present disclosure shall fall within the protection scope of the present disclosure. Therefore, the protection scope of the present disclosure shall be subject to the protection scope of the claims.

## Claims

1. A path determination method, **characterized in that** the method comprises:
acquiring a time constraint condition and a network topology of a communication network, wherein the network topology is used to indicate nodes and links in the communication network, and there is a valid time duration for a link;
determining a target path between a first node and a second node from the network topology according to the time constraint condition, wherein the time constraint condition is used to constrain a valid time duration for a target link for constituting the target path.

2. The method according to claim 1, wherein the time constraint condition comprises at least one of:
the valid time duration for the target link matching at least one first preset time duration;
the valid time duration for the target link not matching at least one second preset time duration.

3. The method according to claim 1, wherein determining the target path between the first node and the second node from the network topology according to the time constraint condition comprises:
acquiring first links meeting the time constraint condition from the network topology, and obtaining a target network topology formed by the first links;
determining a shortest path between the first node and the second node from the target network topology as the target path based on a constraint-based shortest path first (CSPF) algorithm.

4. The method according to claim 1, wherein determining the target path between the first node and the second node from the network topology according to the time constraint condition comprises:
in the network topology, acquiring a plurality of candidate paths between the first node and other nodes in the network topology by traversing node by node outward with taking the first node as a starting node, wherein a candidate path is composed of a plurality of candidate links meeting the time constraint condition, and a candidate link is determined upon traversing a node corresponding to the candidate link;
determining the target path between the first node and the second node from the plurality of candidate paths.

5. The method according to claim 4, wherein in the network topology, acquiring the plurality of candidate paths between the first node and other nodes in the network topology by traversing node by node outward with taking the first node as the starting node comprises:
taking all nodes in the network topology to constitute a first node set, and configuring a second node set and a candidate path set as empty sets initially;
migrating the first node in the first node set to the second node set with taking the first node as a target node;
path screening steps: determining a second path between a third node and the first node according to a first path between the target node and the first node among the candidate path set and a link between the third node directly connected with the target node and the target node; and saving the second path to the candidate path set in response to that the second path meets the time constraint condition and a path cost constraint condition;
target node reselection steps: determining path costs of paths between respective nodes in the first node set and the first node according to the candidate path set; selecting a fourth node with a lowest path cost from the first node set and migrating the fourth node to the second node set, and taking the fourth node with the lowest path cost as a new target node;
repeating the path screening steps and the target node reselection steps until the first node set is an empty set;
acquiring the plurality of candidate paths from a finally obtained candidate path set.

6. The method according to claim 5, wherein saving the second path to the candidate path set in response to that the second path meets the time constraint condition and the path cost constraint condition comprises:
detecting whether the second path meets the time constraint condition;
in response to that the second path meets the time constraint condition, detecting whether the candidate path set includes a third path between the third node and the first node;
in response to that the candidate path set does not include the third path, saving the second path to the candidate path set;
in response to that the candidate path set includes the third path, comparing a path cost of the second path with a path cost of the third path;
in response to that the path cost of the second path is lower than the path cost of the third path, saving the second path to the candidate path set.

7. The method according to any one of claims 1 to 6, wherein the network topology and the time constraint condition are generated by a satellite node or a ground node.

8. The method according to any one of claims 1 to 6, wherein the method further comprises:
acquiring ephemeris information of a satellite node;
determining a valid time duration for a link related to the satellite node according to the ephemeris information of the satellite node.

9. An electronic device, **characterized by** comprising: a memory and a processor; the memory is coupled to the processor; the memory is configured to store instructions executable for the processor; the processor, upon the instructions being executed, performs the method according to any one of claims 1 to 8.

10. A computer-readable storage medium, **characterized in that** computer instructions are stored on the computer-readable storage medium, upon the computer instructions being executed on an electronic device, the electronic device is enabled to perform the method according to any one of claims 1 to 8.
